# EUROPÄISCHE PATENTSCHRIFT

(11) **EP 1 076 186 B1**
(45) Veröffentlichungstag und Bekanntmachung des Hinweises auf die Patenterteilung: **29.10.2003**
(21) Anmeldenummer: 00116818.6
(22) Anmeldetag: 04.08.2000
(51) Int. Cl.: F16C 3/14, F16C 33/10, F16C 33/66

(54) **Lagereinrichtung zum Lagern eines beweglichen Bauteiles, insbesondere der Kurbelwelle eines Verbrennungsmotors**
Bearing device for a movable component,especially the crankshaft of an internal combustion engine
Dispositif de palier pour un composant amovible,en particulier le vilbrequin d'un moteur à combustion interne

(30) Priorität: 13.08.1999 AT 138999
(43) Veröffentlichungstag der Anmeldung: 14.02.2001
(73) Patentinhaber: GE Jenbacher Aktiengesellschaft, 6200 Jenbach (AT)
(72) Erfinder: Herdin, Günther, 6200 Jenbach (AT)
(74) Vertreter: Torggler, Paul Norbert, Dr.

(56) Entgegenhaltungen:
- EP-A- 0 600 559
- DE-A- 3 703 964
- DE-C- 364 105
- DE-C- 722 361
- US-A- 3 503 469
- US-A- 4 183 591
- US-A- 4 343 378
- US-A- 4 793 424
- US-A- 5 785 390

## Beschreibung

Die Erfindung betrifft eine Lagereinrichtung zum Lagern eines beweglichen Bauteils, insbesondere der Kurbelwelle eines Verbrennungsmotors mit mindestens einem den Bauteil aufnehmenden Lager und einer Ölzulaufleitung zu jedem Lager,

Es ist bereits üblich und seit langem bekannt, in den Ölkreislauf von Verbrennungsmotoren Filter einzubauen, um Verschmutzungen von den Lagern abzuhalten. Diese Filter sind meist an einer zentralen Stelle im Ölkreislauf vorgesehen und können nicht ganz zuverlässig verhindern, daß Verschmutzungen, insbesondere der beim Zusammenbau meist nicht ganz vermeidbare Urschmutz, zu den Lagerstellen gelangt. Man hat daher bisher Lagerwerkstoffe verwendet, die im gewissen Sinne weich waren und damit eine Einbettungsfähigkeit für Ölverunreinigungen gehabt haben, sodaß die Funktionsfähigkeit des Lagers nicht wesentlich beeinträchtigt war.

In der gattungsbilden den US 4 343 378 A ist zwischen dem Lager und dem Filter eine düsenartige Verjüngung angeordnet.

Aufgabe der Erfindung ist es, eine verbesserte Lagereinrichtung zu schaffen, bei der auch auf Verschmutzungen besonders empfindlich reagierende Lagerwerkstoffe zum Einsatz kommen.

Erfindungsgemäß wird dies durch die Merkmale des Anspruchs 1 erreicht. Meist sind in einem Motor mehrere Lager, beispielsweise Kurbelwellenlager vorhanden. Gemäß einer bevorzugten Ausführungsform der Erfindung wird der Filter nicht in einer gemeinsamen Hauptölleitung angeordnet, sondern jeweils ein eigenes Filterelement knapp vor dem Lager in der jeweiligen Ölzulaufleitung, die von der Hauptölleitung abzweigt und zum jeweiligen Lager führt. Vorteilhaft ist ein Abstand des Filters vom Lager im Zentimeterbereich und darunter. Sofern es die Konstruktion erlaubt, ist es günstig, wenn der Ausgang des Filters weniger als 5 mm vom Lager entfernt ist, also praktisch direkt am Lager liegt. Damit ist die strecke, in der potentielle Verunreinigungen auftreten können, verschwindend klein, und es werden alle allfälligen Partikel, insbesondere der beim Zusammenbau des Motors entstehende Urschmutz sicher von der Lagerstelle abgehalten.

Die Erfindung eignet sich insbesondere für Gleitlager, die einen harten, galvanisch oder durch Sputtern aufgebrachten Überzug aufweisen, welcher eine geringe Dicke (bevorzugt unter 50 µm) aufweist. Solche Gleitlager sind kostengünstig herzustellen, allerdings wurden sie bisher aufgrund ihrer Empfindlichkeit gegenüber Schmutz nicht eingesetzt. Durch die erfindungsgemäße Filteranordnung kann nun das Verschmutzungsproblem gelöst werden und auch solche direktbeschichteten Gleitlager mit einer dünnen, harten Schicht zuverlässig eingesetzt werden. Die Feinheit des Filters kann an die jeweiligen Verhältnisse angepaßt werden, beispielsweise ist es günstig, Filter zu verwenden, die Partikel zurückhalten, welche größer als 0,1 mm sind.

Konstruktiv kann ein solcher Filter als sogenannter Spaltfilter ausgebildet sein, bei dem das Öl durch mindestens einen die maximal durchgelassene Partikelgröße definierenden Spalt geführt wird. Insbesondere kann ein solcher Spaltfilter einen Einsatzkörper aufweisen, der V-förmige Vertiefungen aufweist. Der gesamte Einsatzkörper ist dann in eine Aufnahmebohrung eingesetzt, die im Durchmesser geringfügig größer ist als der Einsatzkörper selbst. Das Öl kann dann in eine V-förmige Vertiefung einströmen und über den Spalt zwischen der Außenfläche des Einsatzkörpers und der Innenfläche der Aufnahmebohrung in eine benachbarte V-förmige Vertiefung überströmen, die zum Lager hin offen ist. Durch die V-Form wird erreicht, daß die Strömungsgeschwindigkeit über den Spalt an allen Stellen im wesentlichen gleich ist. Derartige Spaltfilter sind an sich konstruktiv bereits bekannt, wurden aber bisher nur vor Einspritzdüsen eingesetzt, um Verunreinigungen aus dem Kraftstoff abzuhalten.

Weitere Vorteile und Einzelheiten der Erfindung werden anhand der nachfolgenden Figurenbeschreibung erläutert.
Die Fig. 1 zeigt einen schematischen Schnitt durch einen Teil eines Verbrennungsmotors im Bereich der Kurbelwelle, wobei drei Kurbelwellenlager dargestellt sind,
die Fig. 2 zeigt in verschiedenen Ansichten den Einsatzkörper eines Spaltfilters.

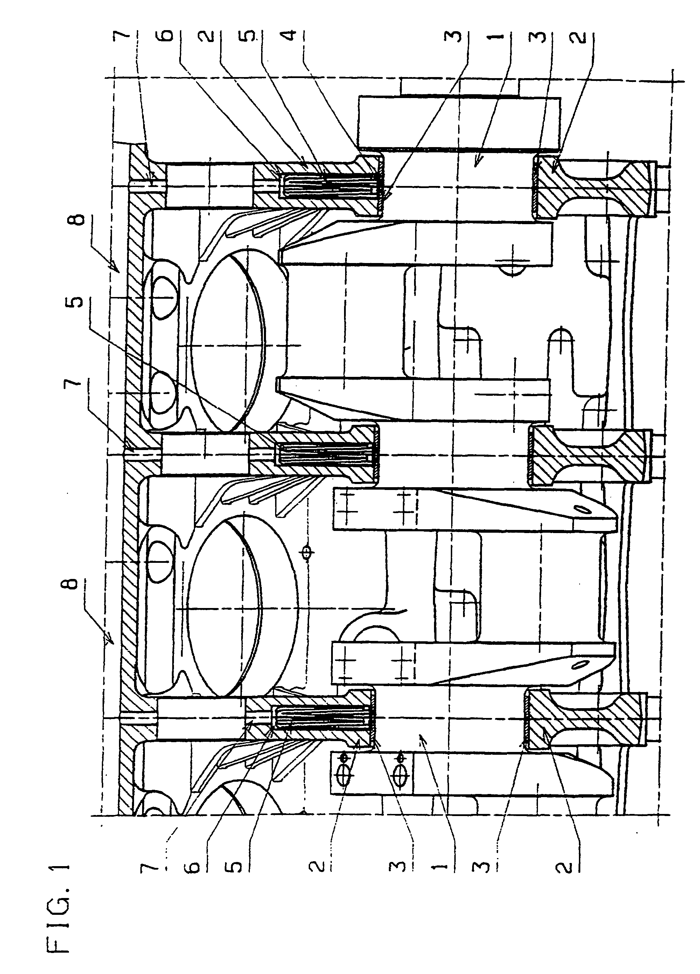

Die Fig. 1 zeigt eine Kurbelwelle 1, die in Lagerschalen 2 drehbar gelagert ist. Als eigentlicher Lagerwerkstoff kommt eine in der Zeichnung vergrößert dargestellte dünne und harte Überzugsschicht 3 zum Einsatz, die beispielsweise galvanisch oder durch Sputtem aufgebracht ist. Die Schicht weist eine Ölverteilungsnut 4 in der oberen Lagerhalbschale auf.

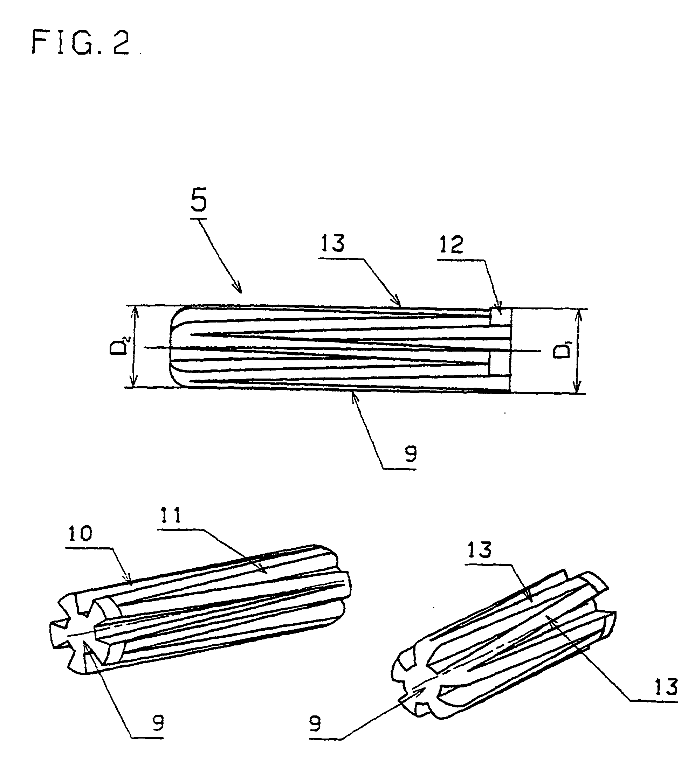

Erfindungsgemäß ist nun vor jedem Lager 3 ein Filterelement 5 angeordnet, dessen Abstand vom Lager 3 lediglich im Zentimeterbereich und darunter liegt und günstigerweise ganz verschwindet, sodaß die zwischen dem Filter 5 und dem Lager 3 liegende Strecke möglichst klein ist. Der Spaltfilter 5, der anhand der Fig. 2 noch genauer beschrieben werden wird, ist in eine erweiterte Aufnahmebohrung 6 der geraden Ölzulaufleitung 7 eingesetzt. Die einzelnen Ölzulaufleitungen 7 zweigen von einer Hauptölleitung 8 ab und führen von dieser zu den einzelnen Lagern. Es ist also nicht ein zentraler Ölfilter vorgesehen, sonder jeweils für das einzelne Lager direkt vor diesem ein eigener Filter 5.

Die Fig. 2 zeigt den Einsatzkörper 9 des Spaltfilters in verschiedenen Ansichten. Dieser Einsatzkörper 9 weist gegenüberliegende V-förmige Vertiefungen 10 und 11 auf, die im eingebauten Zustand abwechselnd zur Hauptölleitung 8 hin bzw. zum Lager 3 hin geöffnet sind. Der Einsatzkörper 9 weist einen im Durchmesser geringfügig vergrößerten Zentnerbund 12 auf, der satt an der Innenfläche der Aufnahmebohrung 6 anliegt. Die übrige Außenfläche 13 weist einen gegenüber dem Durchmesser D1 des Zentrierbundes 12 verringerten Durchmesser D2 auf, womit sie mit einem gewissen Spaltmaß von der Innenfläche der Aufnahmebohrung 6 beabstandet ist. Die Differenz von D1 zu D2 bestimmt also das Spaltmaß und damit die maximal durchgelassene Partikelgröße. Das Öl strömt über die zur Hauptölleitung V-förmig geöffneten Vertiefungen 11 ein und dann zwischen der Außenfläche des Einsatzkörpers 9 und der Innenfläche der Aufnahmebohrung 6 über die Stege 13 der Außenfläche in die benachbarten V-förmigen Vertiefungen 10, welche zum Lager 3 hin offen sind.

Durch diesen Aufbau kann ein zuverlässiges Abhalten von Verschmutzungen, insbesondere des Urschmutzes und späteren möglichen größeren Partikeln von den empfindlichen Lagern 3 gewährleistet werden. Es ist damit möglich, auch kostengünstigere Gleitlager einzusetzen, die einen dünnen harten Überzug aufweisen, der beispielsweise galvanisch oder durch Sputtem aufgebracht ist. Grundsätzlich eignet sich die erfindungsgemäße Filteranordnung aber auch bei anderen Lagertypen, wobei auch andere geeignete Filter als Spaltfilter eingesetzt werden können.

## Patentansprüche

1. Lagereinrichtung zum Lagern eines beweglichen Bauteiles, insbesondere der Kurbelwelle, eines Verbrennungsmotors mit mindestens einem den Bauteil aufnehmenden Lager und einer Ölzulaufleitung zu jedem Lager, wobei in der Ölzulaufleitung direkt vor dem Lager ein Filter angeordnet ist und der Ausgang des Filters (5) direkt vor dem Lager (3) liegt, **dadurch gekennzeichnet, daß** der Filter (5) in einer erweiterten, bis zum Lager (3) reichenden Aufnahmebohrung (6) angeordnet ist und das Lager (3) nicht berührt.

2. Lagereinrichtung nach Anspruch 1, **dadurch gekennzeichnet, daß** die Aufnahmebohrung (6) Teil einer zum Lager (3) führenden, geraden Ölzulaufleitung (7) ist.

3. Lagereinrichtung nach Anspruch 1 oder 2, **dadurch gekennzeichnet, daß** der Ausgang des Filters (5) weniger als 5 mm vom lager beabstandet ist.

4. Lagereinrichtung nach Anspruch 2 oder 3, **dadurch gekennzeichnet, daß** der Durchmesser bzw. die Längserstreckung der Aufnahmebohrung (6) geringfügig größer ist als der Durchmesser bzw. die Längserstreckung des Filters (5).

5. Lagereinrichtung nach einem der Ansprüche 1 bis 4, **gekennzeichnet durch** zwei oder mehrere Lager (3), zu denen jeweils eine Ölzulaufleitung (7) ausgehend von einer gemeinsamen Hauptölleitung (8) führt, wobei in jeder Ölzulaufleitung (7) zwischen der Abzweigung von der Hauptölleitung (8) und dem Lager (3) ein Filter (5) angeordnet ist.

6. Lagereinrichtung nach einem der Ansprüche 1 bis 5, **dadurch gekennzeichnet, daß** zumindest ein Lager (3) ein Gleitlager ist.

7. Lagereinrichtung nach Anspruch 6, **dadurch gekennzeichnet, daß** das Gleitlager (3) einen - vorzugsweise galvanisch oder durch Sputtem aufgebrachten - Überzug aufweist, der bevorzugt härter ist als das darunterliegende formgebende Trägermaterial des Lagers.

8. Lagereinrichtung nach Anspruch 7, **dadurch gekennzeichnet, daß** die Dicke des Überzugs unter 50 µm, vorzugsweise unter 20 µm liegt.

9. Lagereinrichtung nach einem der Ansprüche 1 bis 8, **dadurch gekennzeichnet, daß** der Filter (5) Partikel zurückhält, die größer als 0,1 mm sind.

10. Lagereinrichtung nach einem der Ansprüche 1 bis 9, **dadurch gekennzeichnet, daß** der Filter (5) ein Spaltfilter ist, bei dem das Öl durch mindestens einen die maximal durchgelassene Partikelgröße definierenden Spalt geführt wird.

11. Lagereinrichtung nach Anspruch 10, **dadurch gekennzeichnet, daß** der Spaltfilter einen mit vorzugsweise V-förmigen Vertiefungen versehenen Einsatzkörper (9) aufweist, der in eine Aufnahmebohrung (6) eingesetzt ist, wobei der Spalt zwischen der Außenfläche (13) des Einsatzkörpers (9) und der Innenfläche der Aufnahmebohrung (6) definiert ist.

## Claims

1. A bearing arrangement for supporting a movable component, in particular the crankshaft, of an internal combustion engine, comprising at least one bearing accommodating the component and an oil feed line to each bearing, wherein a filter is arranged in the oil feed line directly upstream of the bearing and the outlet of the filter (5) is directly upstream of the bearing (3), **characterised in that** the filter (5) is arranged in an enlarged receiving bore (6) extending as far as the bearing (3) and does not touch the bearing (3).

2. A bearing arrangement according to claim 1 **characterised in that** the receiving bore (6) is part of a straight oil feed line (7) leading to the bearing (3).

3. A bearing arrangement according to claim 1 or claim 2 **characterised in that** the outlet of the filter (5) is spaced less than 5 mm from the bearing.

4. A bearing arrangement according to claim 2 or claim 3 **characterised in that** the diameter or the longitudinal extent of the receiving bore (6) is slightly greater than the diameter or the longitudinal extent respectively of the filter (5).

5. A bearing arrangement according to one of claims 1 to 4 **characterised by** two or more bearings (3), to each of which a respective oil feed line (7) leads from a common main oil line (8), wherein a filter is arranged in each oil feed line (7) between the branching from the main oil line (8) and the bearing (3).

6. A bearing arrangement according to one of claims 1 to 5 **characterised in that** at least one bearing (3) is a plain bearing.

7. A bearing arrangement according to claim 6 **characterised in that** the plain bearing (3) has a coating which is applied preferably galvanically or by sputtering and which is preferably harder than the subjacent shaping carrier material of the bearing.

8. A bearing arrangement according to claim 7 **characterised in that** the thickness of the coating is below 50 µm, preferably below 20 µm.

9. A bearing arrangement according to one of claims 1 to 8 **characterised in that** the filter (5) retains particles which are larger than 0.1 mm.

10. A bearing arrangement according to one of claims 1 to 9 **characterised in that** the filter (5) is a gap-type filter in which the oil is passed through at least one gap defining the maximum particle size passed through the filter.

11. A bearing arrangement according to claim 10 **characterised in that** the gap-type filter has an insert body (9) which is provided with preferably V-shaped recesses and which is fitted into a receiving bore (6), wherein the gap is defined between the outside surface (13) of the insert body (9) and the inside surface of the receiving bore (6).

## Revendications

1. Dispositif de palier pour le montage d'un composant mobile, en particulier le vilebrequin, d'un moteur à combustion, avec au moins un palier supportant le composant et une conduite d'amenée d'huile allant à chaque palier, où dans la conduite d'amenée d'huile un filtre est disposé directement devant le palier et la sortie du filtre (5) est placée directement devant le palier (3), **caractérisé en ce que** le filtre (5) est disposé dans un perçage de logement (6) élargi, arrivant jusqu'au palier (3) et n'entre pas en contact avec le palier (3).

2. Dispositif de palier selon la revendication 1, **caractérisé en ce que** le perçage de logement (6) fait partie d'une conduite d'amenée d'huile (7) rectiligne, menant au palier (3).

3. Dispositif de palier selon la revendication 1 ou 2, **caractérisé en ce que** la sortie du filtre (5) est espacée du palier de moins de 5 mm.

4. Dispositif de palier selon la revendication 2 ou 3, **caractérisé en ce que** le diamètre ou la longueur du perçage de logement (6) est légèrement supérieur au diamètre, respectivement à la longueur, du filtre (5).

5. Dispositif de palier selon l'une des revendications 1 à 4, **caractérisé par** deux paliers (3) ou plus à chacun desquels mène une conduite d'amenée d'huile (7) partant d'une conduite principale d'huile (8) commune, dans chaque conduite d'amenée d'huile (7), entre la ramification partant de la conduite principale (18) et le palier (3), étant disposé un filtre (5).

6. Dispositif de palier selon l'une des revendications 1 à 5, **caractérisé en ce qu'**au moins un palier (3) est un palier à glissement.

7. Dispositif de palier selon la revendication 6, **caractérisé en ce que** le palier à glissement (3) présente un revêtement - appliqué de préférence de façon galvanique ou par pulvérisation cathodique - revêtement de préférence plus dur que le matériau de support, conférant la forme, sous-jacent, du palier.

8. Dispositif de palier selon la revendication 7, **caractérisé en ce que** l'épaisseur du revêtement est moindre que 50µm, de préférence que 20 µm.

9. Dispositif de palier selon l'une des revendications 1 à 8, **caractérisé en ce que** le filtre (5) retient les particules qui sont plus grosses que 0,1 mm.

10. Dispositif de palier selon l'une des revendications 1 à 9, **caractérisé en ce que** le filtre (5) est un filtre à colonne, où l'huile est conduite à travers au moins une colonne définissant la grosseur maximale de passage des particules.

11. Dispositif de palier selon la revendication 10, **caractérisé en ce que** le filtre à colonnes présente une garniture (9) pourvue de préférence de creux en forme de V, logée dans un perçage de réception (6), où la colonne est définie entre la face extérieure (13) de la garniture (9) et la face intérieure du perçage de réception (6).
